(19) Europäisches Patentamt / European Patent Office / Office européen des brevets

(11) **EP 2 426 182 A1**

(12) **EUROPEAN PATENT APPLICATION**
published in accordance with Art. 153(4) EPC

(43) Date of publication:
**07.03.2012 Bulletin 2012/10**

(21) Application number: **10769666.8**

(22) Date of filing: **22.04.2010**

(51) Int Cl.:
*C09J 7/02* [(2006.01)]    *B60B 7/02* [(2006.01)]
*C09J 133/06* [(2006.01)]

(86) International application number:
**PCT/JP2010/057169**

(87) International publication number:
**WO 2010/125967 (04.11.2010 Gazette 2010/44)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.04.2009 JP 2009109574**

(71) Applicant: **Nitto Denko Corporation**
**Ibaraki-shi**
**Osaka 567-8680 (JP)**

(72) Inventors:
• **HANAKI,Ikkou**
**Ibaraki-shi**
**Osaka 567-8680 (JP)**

• **SAITOU,Yuki**
**Ibaraki-shi**
**Osaka 567-8680 (JP)**
• **YAMANAKA,Takeshi**
**Ibaraki-shi**
**Osaka 567-8680 (JP)**

(74) Representative: **Müller-Boré & Partner**
**Patentanwälte**
**Grafinger Straße 2**
**81671 München (DE)**

(54) **PROTECTIVE FILM FOR AUTOMOTIVE WHEEL**

(57)    Disclosed is a protective film for an automotive wheel, including a base layer and a pressure-sensitive adhesive layer, wherein a trouser tear strength in the machine direction (MD) of the protective film is 3 N or more, and an adhesive force (adherend: a panel with an acrylic clear coating, after standing for 48 hours under the conditions of 23˚C and 50%RH) of the protective film is 4.9 N/25 mm or more at a peeling speed of 0.3 m/minute, and is 19.6 N/25 mm or less at a peeling speed of 30 m/minute.

**Description**

TECHNICAL FIELD

The present invention relates to a protective film for an automotive wheel.

BACKGROUND ART

Heretofore, there have been problems that, in case of transportation of automobiles, for example, ship transportation, an automotive wheel such as an aluminum wheel undergoes permeation of water into the automotive wheel from the outside as a result of a change in humidity in the ship, whereby, rust is generated at a disc brake inside the wheel, and the like. In order to prevent rust generation, a protective film is bonded to the wheel surface.

It is necessary for a protective film used in an automotive wheel to maintain a state of being bonded until delivery of an automobile. In case of peeling off the protective film after delivery of the automobile, it is required that the protective film can be easily peeled off and an adhesive residue does not arise on the wheel surface upon peeling off.

Patent Document 1 discloses a method in which a protective film is attached to the outside of a disc surface of an automotive wheel and a pressure release portion is formed on the protective film, thereby preventing the protective film bonded to the outside of the wheel from peeling caused by a difference in pressure between the inside and outside of the automotive wheel and negative pressure upon transportation of an automobile.

However, use of the protective film of Patent Document 1 may cause a problem that water or brine penetrates from a cut formed so as to release pressure, thus making it impossible to exert a sufficient rust-resistant effect.

Patent Documents 2 to 8 disclose automotive brake disc antitrust films and the like which have weatherability and are less likely to peel off from the wheel surface.

However, the automotive brake disc antitrust films and the like disclosed in Patent Documents 2 to 8 do not still meet the aforementioned requirements, actually.

PRIOR ART DOCUMENTS

PATENT DOCUMENTS

   Patent Document 1: JP-A-2005-155758
   Patent Document 2: JP-A-2006-35914
   Patent Document 3: WO 2005/090453
   Patent Document 4: WO 2005/090098
   Patent Document 5: WO 2007/114450
   Patent Document 6: WO 2008/111663
   Patent Document 7: Japanese Patent No. 3,879,985
   Patent Document 8: JP-A-2008-137547

SUMMARY OF THE INVENTION

PROBLEMS TO BE SOLVED BY THE INVENTION

Under the aforementioned circumstances, an object of the present invention is to provide a protective film for an automotive wheel having excellent performances, which can sufficiently prevent scratching of the wheel surface and staining, and also the generation of rust at a disc brake inside the wheel during a period until delivery of an automobile; and can be easily peeled off from the wheel in case of peeling off the protective film at a high rate when an automobile is delivered after bonding of the protective film and storage for a long period; and also can prevent an adhesive residue from arising upon peeling off, and can prevent a problem of tearing of a base layer from arising upon peeling off.

MEANS FOR SOLVING THE PROBLEMS

The protective film for an automotive wheel of the present invention is a protective film for an automotive wheel, including a base layer and a pressure-sensitive adhesive layer, wherein a trouser tear strength in the machine direction (MD) of the protective film is 3 N or more, and an adhesive force (adherend: a panel with acrylic clear coating, after standing for 48 hours under the conditions of 23˚C and 50%RH) of the protective film is 4.9 N/25 mm or more at a peeling speed of 0.3 m/minute, and is 19.6 N/25 mm or less at a peeling speed of 30 m/minute.

ADVANTAGES OF THE INVENTION

The protective film for an automotive wheel of the present invention has an excellent effect capable of preventing scratching of the wheel surface and staining, and also the generation of rust at a disc brake inside the wheel during a period until delivery of an automobile; and capable of easily being peeled off from the wheel in case of peeling off the protective film at a high rate when an automobile is delivered after bonding of the protective film to the wheel and storage for a long period; and also capable of preventing an adhesive residue from arising after peeling off, and capable of preventing a problem of tearing of a base layer from arising upon peeling off.

BRIEF DESCRIPTION OF THE DRAWING

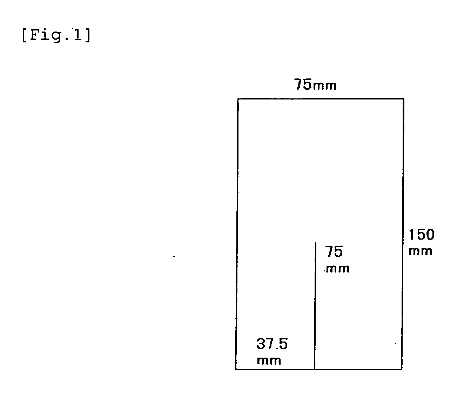

Fig. 1 is an explanatory view of a test piece used in case of evaluating tear strength.

MODE FOR CARRING OUT THE INVENTION

Embodiments of the present invention will be described in detail below.

The protective film for an automotive wheel of the present invention is a protective film for an automotive wheel, including a base layer and a pressure-sensitive adhesive layer, wherein a trouser tear strength in the machine direction (MD) of the protective film is 3 N or more, and an adhesive force (adherend: a panel with an acrylic clear coating, after standing for 48 hours under the conditions of 23˚C and 50%RH) of the protective film is 4.9 N/25 mm or more at a peeling speed of 0.3 m/minute, and is 19.6 N/25 mm or less at a peeling speed of 30 m/minute.

The trouser tear strength (hereinafter also simply referred to as tear strength) in the machine direction (MD) of the protective film in the present invention may be measured based on the below-mentioned measuring method and must be 3 N or more, preferably 4 N or more, and more preferably 8 N or more. Furthermore, the adhesive force (adherend: a panel with an acrylic clear.coating, after standing for 48 hours under the conditions of 23˚C and 50% RH) of the protective film, which is measured based on the below-mentioned measuring method together with the aforementioned tear strength, must be 4.9 N/25 mm or more, and preferably 5.5 N/25 mm or more (the upper limit is 20 N/25 mm or less) at a peeling speed of 0.3 m/minute. Also, the adhesive force must be 19.6 N/25 mm or less, preferably 15 N/25 mm or less, and more preferably 12 N/25 mm or less (the lower limit is 5 N/25 mm or more) at a peeling speed of 30 m/minute. When both characteristics of the tear strength and the adhesive force fall within the aforementioned numerical values, even if the protective film is peeled off from a wheel at a high rate (10 m/minute or 30 m/minute), it is possible to achieve satisfactory peeling off workability and to prevent breakage and tearing of the protective film.

Furthermore, the protective film for an automotive wheel of the present invention can prevent scratching of the wheel surface and staining, and also the generation of rust at a disc brake inside the wheel during a period until delivery of an automobile. Also, the protective film has an excellent effect capable of being easily peeled off from the wheel in case of peeling off the protective film at a high rate when an automobile is delivered after bonding of the protective film to the wheel and storage for a long period; and also capable of preventing an adhesive residue from arising after peeling off, and capable of preventing a problem of tearing of a base layer from arising upon peeling off.

There is no particular limitation on the pressure-sensitive adhesive layer used in the protective film for an automotive wheel of the present invention. For example, the pressure-sensitive adhesive layer preferably includes a pressure-sensitive adhesive composition containing a (meth)acryl-based polymer and a crosslinking agent, and it is more preferable that the (meth)acryl-based polymer contains a (meth)acryl-based monomer having an alkyl group of 1 to 14 carbon atoms as a main component. The (meth)acryl-based monomer, as the main component, constituting the (meth)acryl-based polymer is not particularly limited as long as it is the (meth)acryl-based monomer having an alkyl group of 1 to 14 carbon atoms, preferably 1 to 12 carbon atoms, and more preferably 2 to 10 carbon atoms. Use of those having carbon atoms within the aforementioned range can ensure initial tackiness and tackiness under a low-temperature atmosphere in the winter season, and thus the obtained product is suitable for use in applications for protection of an automotive wheel. It is also particularly a preferred aspect that a (meth)acryl-based monomer having an alkyl group of 1 to 4 carbon atoms is contained as a main component. The content of the (meth)acryl-based monomer having an alkyl group of 1 to 4 carbon atom in the total amount of the (meth)acryl-based monomer having an alkyl group of 1 to 14 carbon atoms is preferably from 40 to 80% by weight, and more preferably from 50 to 75% by weight. Use of the (meth)acryl-based monomer having an alkyl group of 1 to 4 carbon atom within the aforementioned range is effective since the cohesive strength of a pressure-sensitive adhesive is increased and thus an adhesive residue can be prevented upon peeling off after use.

Examples of the (meth)acryl-based monomer having an alkyl group of 1 to 14 carbon atoms include methyl (meth)acrylate, ethyl (meth)acrylate, propyl (meth)acrylate, n-butyl (meth)acrylate, isobutyl (meth)acrylate, sec-butyl (meth)acrylate, t-butyl (meth)acrylate, hexyl (meth)acrylate, cyclohexyl (meth)acrylate, t-butylcyclohexyl (meth)acrylate, 2-ethylhexyl methacrylate, isoamyl (meth)acrylate, n-pentyl (meth)acrylate, isopentyl (meth)acrylate, cyclopentyl (meth) acrylate, n-octyl (meth)acrylate, isooctyl (meth)acrylate, cyclooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate and the like. Among these (meth)acryl-based monomers, ethyl (meth)acrylate, n-butyl (meth)acrylate, isobutyl (meth)acrylate, sec-butyl (meth)acrylate, t-butyl (meth)acrylate and the like are suitably used.

In the present invention, the (meth)acryl-based monomer having an alkyl group of 1 to 14 carbon atoms may be used alone, or a mixture of two or more kinds may be used. The content of the (meth)acryl-based monomer having an alkyl group of 1 to 14 carbon atoms is preferably from 40 to 90% by weight, and more preferably from 50 to 80% by weight, based on the entire monomer. It is not preferred that the content is more than 90% by weight since the cohesive strength of the pressure-sensitive adhesive may sometimes drastically decrease, and that the content is less than 40% by weight since initial tackiness may deteriorate.

As long as performances of the protective film for an automotive wheel are not impaired, the (meth)acryl-based polymer may contain, in addition to the (meth)acryl-based monomer having an alkyl group of 1 to 14 carbon atoms, other monomer components and, for example, a hydroxyl group-containing monomer can be used. Use of the hydroxyl group-containing monomer is effective since crosslinkability with a crosslinking agent is enhanced and thus an adhesive residue can be prevented. Examples of the hydroxyl group-containing monomer include 2-hydroxyethyl (meth)acrylate, 2-hydroxypropyl (meth)acrylate, 4-hydroxybutyl (meth)acrylate, 2-hydroxyhexyl (meth)acrylate, 6-hydroxyhexyl (meth) acrylate, 8-hydroxyoctyl (meth)acrylate, 10-hydroxydecyl (meth)acrylate, 12-hydroxylauryl (meth)acrylate, (4-hydroxymethylcyclohexyl) methyl acrylate, N-methylol(meth)acrylamide, N-hydroxy(meth)acrylamide, vinyl alcohol, allyl alcohol, 2-hydroxyethyl vinyl ether, 4-hydroxybutyl vinyl ether, diethylene glycol monovinyl ether and the like. Among these hydroxyl group-containing monomers, 2-hydroxyethyl (meth)acrylate, 2-hydroxyhexyl (meth)acrylate and the like are suitably used.

In the present invention, the hydroxyl group-containing monomer may be used alone, or a mixture of two or more kinds may be used. The content of the hydroxyl group-containing monomer is preferably from 1 to 30% by weight, more preferably from 2 to 20% by weight, and particularly preferably from 3 to 10% by weight, based on the entire monomer. It is not preferred that the content is more than 30% by weight since the initial tackiness may sometimes deteriorate, and that the content is less than 1% by weight since the cohesive strength of the pressure-sensitive adhesive may drastically decrease.

It is also possible to contain a (meth)acrylate having an alkyl group of 1 to 14 carbon atoms, and a vinyl-based monomer copolymerizable with the hydroxyl group-containing monomer. For example, it is possible to appropriately use cohesive strength/heat resistance-improving components, such as a sulfonic acid group-containing monomer, a phosphoric acid group-containing monomer, a cyano group-containing monomer, a vinyl ester monomer and an aromatic vinyl monomer; components having a functional group capable of increasing an adhesive force or functioning as a crosslinking base point, such as a carboxyl group-containing monomer, an acid anhydride group-containing monomer, an amide group-containing monomer, an amino group-containing monomer, an imide group-containing monomer, an epoxy group-containing monomer and a vinyl ether monomer; and other (meth)acryl-based monomers having an alkyl group. These monomer compounds may be used alone, or a mixture of two or more kinds may be used.

Examples of the sulfonic acid group-containing monomer include styrenesulfonic acid, allylsulfonic acid, 2-(meth)acrylamide-2-methylpropanesulfonic acid, (meth)acrylamidepropanesulfonic acid, sulfopropyl (meth)acrylate, (meth)acryloyloxynaphthalenesulfonic acid and the like.

Examples of the phosphoric acid group-containing monomer include 2-hydroxyethylacryloyl phosphate and the like.

Examples of the cyano group-containing monomer include acrylonitrile, methacrylonitrile and the like.

Examples of the vinyl ester monomer include vinyl acetate, vinyl propionate, vinyl laurate, vinyl pyrrolidone and the like.

Examples of the aromatic vinyl monomer include styrene, chlorostyrene, chloromethylstyrene, α-methylstyrene, benzyl (meth)acrylate and the like.

Examples of the carboxyl group-containing monomer include acrylic acid, methacrylic acid, carboxyethyl (meth) acrylate, carboxypentyl (meth)acrylate, itaconic acid, maleic acid, fumaric acid, crotonic acid and the like. Among these carboxyl group-containing monomers, acrylic acid and methacrylic acid are particularly preferably used.

Examples of the acid anhydride group-containing monomer include maleic anhydride, itaconic anhydride and the like.

Examples of the amide group-containing monomer include acrylamide, methacrylamide, diethyl(meth)acrylamide, N-vinyl pyrrolidone, N-vinyl-2-pyrrolidone, N-(meth)acryloyl pyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, N,N-dimethylaminopropylmethacrylamide and the like.

Examples of the amino group-containing monomer include N,N-dimethylaminoethyl (meth)acrylate, N,N-dimethylaminopropyl (meth)acrylate, N-(meth)acryloylmorpholine, (meth)acryl-based acid aminoalkyl ester and the like.

Examples of the imide group-containing monomer include cyclohexylmaleimide, isopropylmaleimide, N-cyclohexylmaleimide, itaconimide and the like.

Examples of the epoxy group-containing monomer include glycidyl (meth)acrylate, allyl glycidyl ether and the like.

Examples of the vinyl ether monomer include methyl vinyl ether, ethyl vinyl ether, isobutyl vinyl ether and the like.

In the present invention, the copolymerizable vinyl-based monomer may be used alone, or a mixture of two or more kinds may be used. The content of the monomer component is preferably from 10 to 50% by weight, and more preferably from 20 to 40% by weight, based on the entire monomer components of the (meth)acryl-based polymer. It is not preferred that the content is more than 50% by weight since the initial tackiness may sometimes deteriorate, and that the content is less than 10% by weight since the cohesive strength of the pressure-sensitive adhesive may drastically decrease.

Since it is easy to obtain well-balanced pressure-sensitive adhesiveness, a glass transition temperature (Tg) of the (meth)acryl-based polymer is 0°C or lower (usually - 100°C or higher), preferably -10°C or lower, and more preferably -20°C or lower. When the glass transition - temperature is higher than 0°C, the polymer does not easily flow and thus wetting to the adherend may become insufficient, thereby may causing blisters generated between an automotive wheel and the pressure-sensitive adhesive layer of a protective film. The glass transition temperature (Tg) of the (meth)acryl-based polymer can be adjusted within the aforementioned range by appropriately varying the monomer component used or composition ratio. A general value may be employed as the glass transition temperature (Tg) (°C), and it is possible to use a numerical value or the like described, for example, in Polymer Handbook Fourth Edition (edited by J. Brandup et al., 1999, John Wiley & Sons, Inc.) Chapter VI, pp.198-253. In case of a novel polymer, a peak temperature of loss tangent (tan δ) in a viscoelasticity measuring method (shear method, measuring frequency: 1 Hz) may be employed as the glass transition temperature (Tg).

In the production of such a (meth)acryl-based polymer, a known radical polymerization method such as solution polymerization, bulk polymerization or emulsion polymerization can be appropriately selected. The obtained (meth)acryl-based polymer may be any of a random copolymer, a block copolymer, a graft copolymer and the like.

In the solution polymerization, for example, methyl ethyl ketone, acetone, ethyl acetate, tetrahydrofuran, dioxane, cyclohexanone, n-hexane, toluene, xylene, mesitylene, methanol, ethanol, n-propanol, isopropanol, water, various aqueous solutions and the like can be used as a polymerization solvent. The reaction is usually carried out under an inert gas (such as nitrogen) flow at about 60 to 80°C for about 4 to 10 hours.

There is no particular limitation on a polymerization initiator, a chain transfer agent and the like used in the radical polymerization, and they can be appropriately selected before use.

Examples of the polymerization initiator used in the present invention include, but are not limited to, azo-based initiators such as 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropioneamidine) disulfate, 2,2'-azobis(N,N'-dimethyleneisobutylamidine) and 2,2'-azobis[N-(2-carboxyethyl)-2-methylpropioneamidine] hydrate (VA-057, manufactured by Wako Pure Chemical Industries, Ltd.); persulfates such as potassium persulfate and ammonium persulfate; peroxide-based initiators such as di(2-ethylhexyl) peroxydicarbonate, di(4-t-butylcyclohexyl) peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutylperoxy-2-ethyl hexanoate, di(4-methylbenzoyl) peroxide, dibenzoylperoxide, t-butyl peroxyisobutyrate, 1,1-di(t-hexylperoxy) cyclohexane, t-butyl hydroperoxide and hydrogen peroxide; redox-based initiators including a combination of a peroxide and a reducing agent, such as a combination of a persulfate and sodium hydrogen sulfite and a combination of a peroxide and sodium ascorbate; and the like.

The polymerization initiator may be used alone, or a mixture of two or more kinds may be used. The entire content of the polymerization initiator is preferably from 0.005 to 1 part by weight, and more preferably from 0.02 to 0.5 parts by weight, based on 100 parts by weight of the monomer.

In the present invention, a chain transfer agent may be used in the polymerization. Use of the chain transfer agent enables appropriate adjustment of the molecular weight of an acryl-based polymer.

Examples of the chain transfer agent include laurylmercaptan, glycidylmercaptan, mercaptoacetic acid, 2-mercaptoethanol, thioglycolic acid, 2-ethylhexyl thioglycolate, 2,3-dimercapto-1-propanol and the like.

These chain transfer agents may be used alone, or a mixture of two or more kinds may be used. The entire content of the chain transfer agent is from about 0.01 to 0.1 parts by weight, based on 100 parts by weight of the monomer.

The pressure-sensitive adhesive composition used in the present invention is effective since those having more excellent weatherability and heat resistance can be obtained by crosslinking the (meth)acryl-based polymer using a crosslinking agent. As the crosslinking agent used in the present invention, a compound having at least two functional groups capable of reacting (forming a bond) with a functional group of the functional group-containing (meth)acryl-based monomer in a molecule is used, and an isocyanate compound, an epoxy compound, an oxazoline compound, a melamine-based resin, an aziridine derivative, a metal chelate compound and the like can be used. It is a preferred aspect to use an isocyanate compound among these crosslinking agents. These compounds may be used alone, or may be used in combination.

Examples of the isocyanate compound among these crosslinking agents include aromatic isocyanates such as tolylene diisocyanate and xylene diisocyanate; alicyclic isocyanates such as isophorone diisocyanate; aliphatic isocyanates such as hexamethylene diisocyanate; emulsion type isocyanates; and the like.

Examples of more specific isocyanate compounds include lower aliphatic polyisocyanates such as butylene diisocyanate and hexamethylene diisocyanate; alicyclic isocyanates such as cyclopentylene diisocyanate, cyclohexylene diisocyanate and isophorone diisocyanate; aromatic diisocyanates such as 2,4-tolylene diisocyanate, 4,4'-diphenylmethane diisocyanate and xylylene diisocyanate; isocyanate adducts such as a trimethylolpropane/tolylene diisocyanate trimer adduct (manufactured by Nippon Polyurethane Industry Co., Ltd. under the trade name of CORONATE L), a trimethylolpropane/hexamethylene diisocyanate trimer adduct (manufactured by Nippon Polyurethane Industry Co., Ltd. under the trade name of CORONATE HL) and an isocyanurate compound of hexamethylene diisocyanate (manufactured by Nippon Polyurethane Industry Co., Ltd., under the trade name of CORONATE HX); self emulsification type polyisocyanates (manufactured by Nippon Polyurethane Industry Co., Ltd. under the trade name of AQUANATE 200); and the like. These isocyanate compounds may be used alone, or a mixture of two or more kinds may be used.

Examples of the oxazoline compound include 2-oxazoline, 3-oxazoline, 4-oxazoline, 5-keto-3-oxazoline, EPOCROSS (manufactured by NIPPON SHOKUBAI CO., LTD.) and the like. These compounds may be used alone, or may be used in combination.

Examples of the epoxy compound include polyglycidylamine compounds such as N,N,N',N'-tetraglycidyl-m-xylenediamine (manufactured by Mitsubishi Gas Chemical Company, Inc. under the trade name of TETRAD-X), 1,3-bis (N,N-diglycidylaminomethyl)cyclohexane (manufactured by Mitsubishi Gas Chemical Company, Inc. under the trade name of TETRAD-C), tetraglycidyldiaminodiphenylmethane, triglycidyl-p-aminophenol, diglycidylaniline and diglycidyl-o-toluidine; and the like. These compounds may be used alone, or may be used in combination.

Examples of the melamine-based resin include hexamethylolmelamine, a water-soluble melamine-based resin and the like.

Examples of the aziridine derivative include products which are commercially available under the trade name of HDU (manufactured by Sogo Pharmaceutical Co., Ltd.), TAZM (manufactured by Sogo Pharmaceutical Co., Ltd.), TAZO (manufactured by Sogo Pharmaceutical Co., Ltd.) and the like. These compounds may be used alone, or may be used in combination.

Examples of the metal chelate compound include metal components such as aluminum, iron, tin, titanium and nickel; chelate components such as acetylene, methyl acetoacetate and ethyl lactate; and the like. These compounds may be used alone, or may be used in combination.

The content of these crosslinking agents is appropriately selected depending on balance with the (meth)acryl-based polymer to be crosslinked, as a protective film for an automotive wheel. In order to obtain sufficient weatherability and heat resistance by the cohesive strength of a (meth)acryl-based polymer, the content of the crosslinking agent is preferably from 0.1 to 6 parts by weight, more preferably from 0.2 to 4 parts by weight, and particularly preferably from 0.4 to 2 parts by weight, based on 100 parts by weight of the (meth)acryl-based polymer. When the content of the crosslinking agent is less than 0.1 parts by weight, crosslinkage due to the crosslinking agent becomes insufficient and thus a solvent-insoluble fraction tends to decrease. Also, the cohesive strength of a pressure-sensitive adhesive layer decreases, thereby having a tendency to cause an adhesive residue. On the other hand, when the content is more than 6 parts by weight, the pressure-sensitive adhesive layer lacks an initial adhering strength and also the polymer has a large cohesive strength and decreased fluidity, and thus wetting with the adherend may become insufficient, thereby having a tendency to cause peeling.

In order to impart weatherability to the protective film for an automotive wheel of the present invention, the pressure-sensitive adhesive layer can contain a weathering stabilizer. The weathering stabilizer refers to an ultraviolet absorber, a light stabilizer or an antioxidant, and these compounds may be used, as the weathering stabilizer, alone, or a mixture of two or more kinds may be used. Use of the weathering stabilizer enables prevention of peeling of a film and prevention of an adhesive residue after storage over a long period in a state of bonding the protective film for an automotive wheel of the present invention to a wheel.

Examples of the ultraviolet absorber include a benzotriazole-based ultraviolet absorber, a triazine-based ultraviolet absorber, a benzophenone-based ultraviolet absorber, a salicylate-based ultraviolet absorber, a cyanoacrylate-based ultraviolet absorber and the like.

Specific examples of the ultraviolet absorber include 2-hydroxy-4-methoxybenzophenone, 2-hydroxy-4-n-octyloxybenzophenone, 2-(2'-hydroxy-5'-methylphenyl)benzotriazole, 2-(2'-hydroxy-3'-t-butyl-5'-methylphenyl)-5-chlorobenzotriazole, 2-[2-hydroxy-3,5-bis(a,a-dimethylbenzyl)phenyl]-2H-benzotriazole, 2,2'-methylenebis[4-(1,1,3,3-tetrabutyl)-6-(2H-benzotriazole)], 2-(4,6-diphenyl-1,3,5-triazin-2-yl)-5-[(hexyl)oxy]-phenol, 2,4-di-t-butylphenyl-3,5-di-t-butyl-4-hydroxybenzoate, 4-t-butylphenyl salicylate, ethyl-2-cyano-3,3-diphenyl acrylate and the like. These ultraviolet absorbers may be used alone, or two or more kinds may be used in combination.

It is preferred to use a benzotriazole-based ultraviolet absorber among the ultraviolet absorbers. When the benzotriazole-based ultraviolet absorber is used, weatherability can be further improved, and thus it is possible to prevent an adhesive force from decreasing by bleeding of the ultraviolet absorber. As a result, the adhesive force can be sufficiently maintained even when a protective film is bonded to a wheel and then stored over a long period. Therefore, it is possible to sufficiently prevent the film from peeling off from the wheel during running as a result of a decrease in the adhesive force.

It is also possible to sufficiently prevent an adhesive residue after storage over a long period.

In the pressure-sensitive adhesive layer, the content of the ultraviolet absorber is preferably from 0.05 to 2 parts by weight, and more preferably from 0.1 to 1.5 parts by weight, based on 100 parts by weight of the resin solid content of the acryl-based pressure-sensitive adhesive in the pressure-sensitive adhesive layer. When the content is less than 0.05 parts by weight, the effect of improving weatherability cannot be likely to be obtained. In contrast, when the content is more than 2 parts by weight, bleeding of the ultraviolet absorber may arise.

Conventionally known light stabilizers can be used as the light stabilizer, and known light stabilizers such as a hindered amine light stabilizer and a benzoate light stabilizer can be appropriately used. Particularly, since weatherability can be further improved by using the hindered amine light stabilizer (HALS) among these light stabilizers, it is possible to prevent the adhesive force from decreasing as a result of bleeding of the light stabilizer. As a result, the adhesive force can be sufficiently maintained even when a protective film is bonded to a wheel and then stored over a long period. Therefore, it is possible to sufficiently prevent the film from peeling off from the wheel during running as a result of a decrease in the adhesive force. It is also possible to sufficiently prevent an adhesive residue after storage over a long period.

Examples of the hindered amine light stabilizer include bis-(2,2,6,6-tetramethyl-4-piperidyl) sebacate, a [succinic acid dimethyl-1-(2-hydroxyethyl)-4-hydroxy-2,2,6,6-tetramethylpiperidine]condensate, 1,2,2,6,6-pentamethyl-4-piperidyl-tridecyl-1,2,3,4-butane tetracarboxylate, 1,2,2,6,6-pentamethyl-4-piperidinol, an ester of 3,9-bis(2-hydroxy-1,1-dimethylethyl)-2,4,8,10-tetraspiro[5,5]undecane and butanetetracarboxylic acid and the like. These light stabilizers may be used alone, or two or more kinds may be used in combination.

Examples of the hindered amine light stabilizer include reaction type light stabilizers such as ADK STAB LA-82 and ADK STAB LA-87 manufactured by Asahi Denka Co., Ltd.; monomer type light stabilizers such as Hostavin N-20 manufactured by Hoechst Japan Ltd., Tomisoap 77 manufactured by Yoshitomi Fine Chemicals Ltd. and SANOL LS-770 manufactured by Sankyo Life Tech Co., Ltd.; and oligomer type light stabilizers such as Uvinal 5050H manufactured by BASF Japan Ltd.

In the pressure-sensitive adhesive layer, the content of the light stabilizer is preferably from 0.05 to 2 parts by weight, and more preferably from 0.05 to 1.5 parts by weight, based on 100 parts by weight of the resin solid content of the acryl-based pressure-sensitive adhesive in the pressure-sensitive adhesive layer. When the content is less than 0.05 parts by weight, the effect of improving weatherability cannot be likely to be obtained. In contrast, when the content is more than 2 parts by weight, bleeding of the light stabilizer may arise.

It is possible to appropriately use, as an antioxidant, known antioxidants such as a hindered phenol antioxidant, a phosphorus-based processing heat stabilizer, a lactone-based processing heat stabilizer, and a sulfur-based heat-resistant stabilizer. These antioxidants may be used alone, or a mixture of two or more kinds may be used.

The amount of the antioxidant added is preferably about 3 parts by weight or less, more preferably about 1 part by weight or less, and still preferably about 0.01 to 0.5 parts by weight, based on 100 parts by weight of the base polymer of each resin layer.

Furthermore, a tackifier may be added to the pressure-sensitive adhesive composition. There is no particular limitation on the tackifier, and it is possible to use those which have conventionally been used. Examples thereof include modified rosin-based resins such as a xylene resin, rosin, polymerized rosin, hydrogenated rosin and a rosin ester; terpene-based resins such as a terpene resin, a terpenephenol resin and a rosin phenol resin; aliphatic, aromatic and alicyclic petroleum resins; a cumarone resin, a styrene-based resin, an alkyl phenol resin; and the like. Among these tackifiers, a rosin-based resin, an aromatic petroleum resin and a terpene phenol resin are preferred from the viewpoint of excellent tackiness with an automotive wheel such as an aluminum wheel. These tackifiers may be used alone, or two or more kinds may be used in combination.

In the pressure-sensitive adhesive layer, the content of the tackifier is preferably from 1 to 100 parts by weight, and more preferably from 5 to 50 parts by weight, based on 100 parts by weight of the resin solid content of the acryl-based pressure-sensitive adhesive in the pressure-sensitive adhesive layer. When the content is less than 1 part by weight, the adhesive force of the pressure-sensitive adhesive layer may become insufficient. In contrast, when the content is more than 100 parts by weight, it is impossible to completely peel off a protective film from an automotive wheel when the film is peeled off from the wheel, and thus an adhesive residue may arise on the wheel.

Furthermore, the pressure-sensitive adhesive composition may contain other known additives. For example, it is possible to appropriately add a powder of a coloring agent, a pigment or the like, a dye, a surfactant, a plasticizer, a surface lubricant, a leveling agent, a surfactant, a softening agent, an antistatic agent, an inorganic or organic filler, a metal powder, a particle-shaped substance, a foil-shaped substance and the like according to use applications. The amount of these optional components blended can be an amount used which is usually used in the field of a surface protective material.

It is possible to use, as a method for producing the protective film for an automotive wheel of the present invention, a method in which a pressure-sensitive adhesive layer is formed on a base layer, and there is no particular limitation. For example, the protective film for an automotive wheel is produced by a method in which the pressure-sensitive adhesive composition is applied on a separator or the like subjected to a peeling off treatment and a polymerization solvent or the like is removed by drying to form a pressure-sensitive adhesive layer on a base layer, or a method in which the pressure-sensitive adhesive composition is applied on a base layer and a polymerization solvent or the like is removed by drying to form a pressure-sensitive adhesive layer on the base layer. Thereafter, an aging treatment may be carried out for the purpose of the adjustment of component migration of the pressure-sensitive adhesive layer, the adjustment of a crosslinking reaction and the like. When a protective film for an automotive wheel is formed by applying the pressure-sensitive adhesive composition on the base layer, one or more kinds of solvents other than the polymerization solvent may be additionally added to the pressure-sensitive adhesive composition so as to enable uniform application on the base layer.

Examples of the solvent used in the present invention include methyl ethyl ketone, acetone, ethyl acetate, tetrahydrofuran, dioxane, cyclohexanone, n-hexane, toluene, xylene, mesitylene, methanol, ethanol, n-propanol, isopropanol, water, various aqueous solutions and the like. These solvents may be used alone, or a mixture of two or more kinds may be used.

It is possible to use, as a method for forming the pressure-sensitive adhesive layer of the present invention, a known method used in the production of a surface protective film. Specific examples thereof include methods such as an extrusion coating method using roll coating, kiss roll coating, gravure coating, reverse coating, roll brush, spray coating, dip roll coating, bar coating, knife coating, air knife coating, die coater or the like.

There is no particular limitation on the thickness of the pressure-sensitive adhesive layer, and the thickness is appropriately selected. For example, the thickness is preferably from 3 to 50 $\mu$m, and more preferably from 5 to 40 $\mu$m. Whereby, adhesion as well as adhesive force between the pressure-sensitive adhesive layer and the wheel for an automobile can be improved. When the thickness is less than 3 $\mu$m, sufficient adhesion and adhesive force cannot be likely to be obtained. In contrast, even when the thickness is more than 50 $\mu$m, improvement in the effect cannot be expected and thus it may become economically disadvantageous.

The surface of the pressure-sensitive adhesive layer may undergo surface treatments such as a corona treatment, a plasma treatment, and an ultraviolet treatment.

In the present invention, the gel fraction of the pressure-sensitive adhesive layer, which is measured based on the below-mentioned measuring method, is preferably from 60 to 95% by weight, more preferably from 70 to 93% by weight, and particularly preferably from 75 to 90% by weight. When the gel fraction is less than 60% by weight, a cohesive strength decreases and thus impact resistance (durability) or the like may be inferior. In contrast, when the gel fraction is more than 95% by weight, the tackiness may be inferior.

The gel fraction of the pressure-sensitive adhesive layer can be adjusted by the amount of a crosslinking agent added, conditions of a crosslinking treatment (heat treatment temperature, heating time, etc.) and the like. The crosslinking treatment may be carried out at the temperature in the drying step of the pressure-sensitive adhesive layer, or may be carried out by additionally providing a crosslinking treatment step after the drying step.

In the present invention, the weight average molecular weight (Mw) of the sol component of the pressure-sensitive adhesive layer, which is measured based on the below-mentioned measuring method, is preferably within a range from 5,000 to 300,000, and more preferably from 10,000 to 200,000. When the weight average molecular weight is within the aforementioned range, it is preferred since it is possible to achieve a balance between tackiness and cohesiveness of the pressure-sensitive adhesive composition and to prevent contamination of the adherend (automotive wheel) with a low-molecular weight substance.

The degree of swelling of the pressure-sensitive adhesive layer, which is measured based on the below-mentioned measuring method in the present invention, is preferably within a range from 5 to 40 times, and more preferably from 10 to 30 times. When the degree of swelling is not within the aforementioned range, the effect of improving adhesion to the adherend (automotive wheel) tends to become inferior.

When the surface of the pressure-sensitive adhesive layers used in the protective film for an automotive wheel of the present invention is exposed, the pressure-sensitive adhesive layer may be protected with a sheet subjected to a peeling treatment (peeling sheet, separator, peeling liner) until it is put into practice.

Examples of the constituent material of the separator (peeling sheet, peeling liner) include appropriate thin leaf bodies, for example, a plastic film made of polyethylene, polypropylene, polyethylene terephthalate, polyester film or the like, a porous material such as paper, a cloth or a nonwoven fabric, a net, a foamed sheet, a metal foil, a laminate thereof and the like. From the viewpoint of excellent surface smoothness, a plastic film is suitably used.

The film is not particularly limited as long as it is a film capable of protecting the pressure-sensitive adhesive layer, and examples thereof include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, an ethylene-vinyl acetate copolymer film and the like.

The thickness of the separator is usually from about 5 to 200 μm, and preferably from about 5 to 100 μm.

The separator can also be optionally subjected to a mold release treatment and a stain-resistant treatment with a silicone-based, fluorine-based, long chain alkyl-based or fatty acid amide-based releasant, silica powder and the like, and a coating type, kneading type or vapor deposition type antistatic treatment. Particularly, it is possible to further enhance a peeling property from the pressure-sensitive adhesive layer by appropriately subjecting the surface of the separator to a peeling treatment such as a silicone treatment, a long chain alkyl treatment or a fluorine treatment.

In the aforementioned production method, the sheet subjected to a peeling treatment (peeling sheet, separator, peeling liner) can be used, as it is, as a separator of a protective film for an automotive wheel, and thus simplification in the steps can be carried out.

The protective film for an automotive wheel of the present invention is obtained by forming a pressure-sensitive adhesive layer with the aforementioned constitution on one surface or both surfaces of a base layer.

In the present invention, the film means a planar material, and also usually includes those called tapes and sheets.

It is preferred to use, as the base layer of the present invention, a polyethylene-based resin layer including a polyethylene-based resin from the viewpoints of weatherability (water resistance, moisture resistance, heat resistance, etc.), impact resistance (tear strength, etc.) and transparency. Examples of the polyethylene-based resin layer include resin layers including olefin-based polymers such as an ethylene-based polymer (low density, high density, linear low density polyethylene resin, etc.) and an ethylene-α olefin copolymer; and olefin-based polymers of ethylene and other monomers, such as an ethylene-vinyl acetate copolymer, an ethylene-methyl methacrylate copolymer, an ethylene-propylene copolymer and an ethylene-propylene-α olefin copolymer. It is more preferred that the polyethylene-based resin layer includes a low density polyethylene resin. Use of these polyethylene layers provides those which are preferred from the viewpoints of weatherability, impact resistance and transparency.

It is more preferred aspect that the base layer includes only a low density polyethylene resin and is a single layer. A base layer formed by blending with different plural kinds of polyolefin resins such as polyethylene and polypropylene becomes brittle and thus a problem such as tear may arise upon peeling off the film (surface protective film). It is not preferred since tear of the base layer may arise upon peeling off at a high rate.

The base layer may be formed by stretching a resin or non-stretching. The polyethylene-based resin layer may be used alone, or two or more kinds may be used by bonding with one another.

There is no particular limitation on the thickness of the base layer and, for example, the thickness is preferably from 10 to 200 μm, and more preferably from 30 to 150 μm. When the thickness is less than 10 μm, bonding workability may be inferior. In contrast, when the thickness is more than 200 μm, conformability to a curved surface tends to be inferior.

In order to improve adhesion with other resin layers, a pressure-sensitive adhesive layer, a priming agent and the like, the surface of the base layer (or each resin layer) may be subjected to a surface treatment such as a corona treatment, a plasma treatment or an ultraviolet treatment. The base layer (resin layer) may be subjected to a back surface treatment.

From the viewpoint of weatherability, the base layer can also be appropriately subjected to a treatment using a weathering stabilizer as long as transparency or the like of the present invention is not impaired.

The treatment using the weathering stabilizer (ultraviolet absorber, light stabilizer, antioxidant) can be carried out by allowing the surface of the resin layer surface to undergo a coating treatment or a transfer treatment, kneading to the resin layer and the like.

As long as the effects of the present invention are not impaired, the base layer can also be blended with optional additives such as a flame retardant, inert inorganic particles, organic particles, a lubricant, and an antistatic agent.

In the present invention, it is preferred to include, as the base layer, a resin film having heat resistance and solvent resistance as well as flexibility, so as to be used in a surface protective film for an automotive wheel. Since the base layer has flexibility, it is possible to apply a pressure-sensitive adhesive composition by a roll coater or the like and to wind up into a roll shape.

The base layer can be optionally subjected to a mold release treatment and a stain-resistant treatment with a silicone-based, fluorine-based, long chain alkyl-based or fatty acid amide-based releasant, silica powder and the like, an acid treatment, an alkali treatment, a primer treatment, and a coating type, kneading type or vapor deposition type antistatic treatment.

If necessary, the base layer can also be appropriately provided with a surface coating layer, for example, a hard coating layer or a soft coating layer. Examples thereof include a silicone-based, melamine-based, urethane-based, silane-based, acrylate-based thermocurable or chemical reaction curable surface coating layers. Whereby, it is possible to obtain a surface protective film for an automotive wheel, which is more excellent in scratch resistance, chemical resistance, weatherability, antifogging properties and the like.

The protective film for an automotive wheel of the present invention is suitable for use in a protective film for an automotive wheel, which undergoes outdoor storage over a long period and a distribution process, since it has a function excellent in weatherability, adhesion reliance, transparency and impact resistance due to use of the pressure-sensitive adhesive layer and the base layer.

In the present invention, the protective film for an automotive wheel means a film for protecting the wheel surface of an automobile or the like indoors and outdoors and include, for example, those used to protect the wheel surface of a compact car, a passenger car, a large car, a special vehicle, a heavy industrial machine, a motorcycle or the like, and those used so as to exert a rust-resistant effect on a disc brake inside the wheel.

The material of an automotive wheel, to which the protective film for an automotive wheel is bonded, is not particularly limited as long as it is used as a material of a wheel. Among the materials, since an adhesive force is comparatively large after storage over a long period in a state of being bonded and an adhesive residue can be sufficiently prevented, an aluminum wheel is particularly preferred.

EXAMPLES

Examples and the like specifically illustrating constitutions and effects of the present invention will be described below, but the present invention is not limited thereto. Evaluation items in Examples were measured in the following manners.

[Example 1]

(Preparation of (meth)acryl-based Polymer)

Into a four-necked flask equipped with a stirring blade, a thermometer, a nitrogen gas introducing tube and a condenser, 30 parts by weight of 2-ethylhexyl acrylate, 70 parts by weight of ethyl acrylate, 5 parts by weight of methyl methacrylate, 4 parts by weight of 2-hydroxyethyl acrylate, 0.2 parts by weight of 2,2'-azobisisobutyronitrile as a polymerization initiator, and 200 parts by weight of ethyl acetate were charged and a nitrogen gas was introduced while gently stirring, and then a polymerization reaction was carried out for about 6 hours by maintaining the liquid temperature in the flask at about 65˚C to prepare a (meth)acryl-based polymer solution (35% by weight). The(meth)acryl-based polymer showed a glass transition temperature (Tg) of -29˚C.

(Preparation of Pressure-Sensitive Adhesive Solution)

The (meth)acryl-based polymer solution (35% by weight) was diluted with ethyl acetate to obtain a 20% by weight solution. Then, 0.6 parts by weight of an isocyanate-based compound (CORONATE L, manufactured by Nippon Polyurethane Industry Co., Ltd.), 0.05 parts by weight of dibutyltin dilaurate (1% by weight ethyl acetate solution) as a crosslinking catalyst and 1 part by weight of a light stabilizer (SANOL LS-770, manufactured by Sankyo Life Tech Co., Ltd.) as a weathering stabilizer were added, each amount of which was based on 100 parts by weight of the (meth)acryl-based polymer solid content in the solution, followed by mixing with stirring at normal temperature (25˚C) for about 1 minute to prepare a (meth)acryl-based pressure-sensitive adhesive solution (A).

(Production of Protective Film for Automotive Wheel)

A low density polyethylene resin (Petrocene 180, density: 0.922 g/cm$^3$, manufactured by TOSOH CORPORATION) was extruded through dies heated at 160˚C by an inflation method to form a 75 μm thick polyethylene film and, furthermore, one surface of the polyethylene film was subjected to a corona treatment. The (meth)acryl-based pressure-sensitive adhesive solution (A) was applied to the surface subjected to a corona treatment and heated at 90˚C for 1 minute to form a 10 μn thick pressure-sensitive adhesive layer, and thus a protective film for an automotive wheel was produced.

[Example 2]

In the same manner as in Example 1, except that a (meth)acryl-based pressure-sensitive adhesive solution (B) obtained by blending 0.8 parts by weight of the isocyanate-based compound (CORONATE L, manufactured by Nippon Polyurethane Industry Co., Ltd.) was used, a protective film for an automotive wheel was produced.

[Example 3]

In the same manner as in Example 1, except that a (meth)acryl-based pressure-sensitive adhesive solution (C) obtained by blending 1.0 parts by weight of the isocyanate-based compound (CORONATE L, manufactured by Nippon Polyurethane Industry Co., Ltd.) was used, a protective film for an automotive wheel was produced.

[Comparative Example 1]

(Preparation of (meth)acryl-based Polymer)

Into a four-necked flask equipped with a stirring blade, a thermometer, a nitrogen gas introducing tube and a condenser, 100 parts by weight of butyl acrylate, 5 parts by weight of acrylic acid, 0.2 parts by weight of benzoyl peroxide as a polymerization initiator, and 157 parts by weight of toluene were charged and a nitrogen gas was introduced while gently stirring, and then a polymerization reaction was carried out for about 6 hours by maintaining the liquid temperature in the flask at about 65°C to prepare a (meth)acryl-based polymer solution (40% by weight).

(Preparation of Pressure-Sensitive Adhesive Solution)

The (meth)acryl-based polymer solution (40% by weight) was diluted with toluene to obtain a 20% by weight solution. Then, 4.0 parts by weight of an isocyanate-based compound (CORONATE L, manufactured by Nippon Polyurethane Industry Co., Ltd.), 20 parts by weight of a terpene-modified phenol resin (Sumilite Resin PR-12603N, manufactured by Sumitomo Bakelite Co., Ltd.) and 30 parts by weight of a xylene resin (NIKANOL H-80, manufactured by Mitsubishi Gas Chemical Company Inc.) were added, each amount of which was based on 100 parts by weight of the (meth)acryl-based polymer solid content in the solution, followed by mixing with stirring at 25°C for about 1 minute to prepare a (meth)acryl-based pressure-sensitive adhesive solution (D).

(Production of Protective Film for Automotive Wheel)

After blending 45% by weight of a homopolypropylene resin (PM600A, density: 0.9 g/cm$^3$, manufactured by SunAllomer Ltd.), 45% by weight of a random polypropylene resin (PC630S, density: 0.9 g/cm$^3$, manufactured by SunAllomer Ltd.) and 10% by weight of a low density polyethylene resin (Petrocene 180, density: 0.922 g/cm$^3$, manufactured by TOSOH CORPORATION), the obtained mixture was extruded through dies heated at 220°C by a T-die method to form a 40 μm blend film and, furthermore, one surface of the film was subjected to a corona treatment. The (meth)acryl-based pressure-sensitive adhesive solution (D) was applied on the surface subjected to a corona treatment and heated at 90°C for 1 minute to form a 10 μm thick pressure-sensitive adhesive layer, and thus a protective film for an automotive wheel was produced.

[Evaluations]

The protective films obtained in Examples and the like were used as test samples and each of the test samples was allowed to undergo the following evaluations. The evaluation results are shown in Table 1 to Table 6.

(Gel Fraction)

A gel fraction was measured by the following method. A given amount (about 500 mg) of the pressure-sensitive adhesive layer was collected by scraping from the obtained protective film for an automotive wheel, wrapped with a porous tetrafluoroethylene sheet having an average pore diameter of 0.2 μm (manufactured by Nitto Denko Corporation under the trade name of "NTF1122") and tied up with a kite string. In that case, the weight thereof was measured and it was regarded as a weight before immersion. The weight before immersion is the total weight of the pressure-sensitive adhesive layer, the tetrafluoroethylene sheet and the kite string. The weight of the porous tetrafluoroethylene sheet and kite string to be used was also measured, and it was regarded as a packaging weight. Next, the pressure-sensitive adhesive layer was wrapped with a porous tetrafluoroethylene sheet and tied up with a kite string to obtain a sample. The obtained sample was placed in a 50 ml container weighed in advance, and the container was filled with ethyl acetate and was left to stand at room temperature (23°C) for 7 days. The sample was taken out from the container and dried in a dryer at 130°C for 2 hours to remove ethyl acetate, and then the sample weight was measured and it was regarded as a weight after immersion. Then, a gel fraction was calculated by the following equation. A is the weight after immersion, B is the packaging weight and C is the weight before immersion.

$$\text{Gel fraction (\% by weight)} = (A - B)/(C - B) \times 100$$

(Molecular Weight of Sol component)

The weight average molecular weight of a sol component was measured by the following method. After measuring the gel fraction, the entire ethyl acetate was dried to prepare a THF solution having a concentration of a sol component of 5.0 g/L, which was then left to stand overnight. This solution was filtered through a Teflon@ membrane filter having a pore diameter of 0.45 $\mu$m and then the polystyrene-equivalent weight average molecular weight of the sol component in the obtained filtrate was calculated by a GPC method. HLC8120GPC manufactured by TOSHO Co., Inc. was used as an analyzer.

(Degree of Swelling)

The degree of swelling means a value (times) calculated as W2/W1 when a sample with the total weight before immersion for measurement of a gel fraction (pressure-sensitive adhesive layer, tetrafluoroethylene sheet and kite string) W1 is immersed in ethyl acetate at normal temperature (for example, 23˚C) for 7 days and then the wet weight when taken out (ethyl acetate adhered to the surface as an insoluble matter is wiped off) is regarded as W2.

$$\text{(Degree of swelling)} = (W2/W1)$$

Under the following conditions, an adhesive force was measured.

(Production of Test Piece)

A 2 mm thick aluminum plate was prepared and an acrylmelamine coating material for an aluminum wheel (Super Rack 5000AW-10 Clear, manufactured by Nippon Paint Co., Ltd.) was uniformly applied on the surface of the aluminum plate using a spray gun and dried at 150˚C for 1 hour and the coated plate thus obtained was used as an adherend (hereinafter also referred to as a panel with an acrylic clear coating). Next, the surface of the adherend was cleaned using alcohol (ethyl alcohol, isopropyl alcohol, etc.) and a protective film cut into pieces each measuring 25 mm width and 100 mm length was bonded with the adherend (a panel with an acrylic clear coating) under a linear pressure of 78.5 N/cm at 0.3 m/minute using a bonding machine to obtain test pieces. The adherend and the protective film used in case of evaluation were left to stand at 23 $\pm$ 2˚C and 50 $\pm$ 5%RH for 2 hours or more and then the measurement was carried out under the following conditions.

(Normal Adhesive force)

The aforementioned test piece was left in a thermohygrostat adjusted at 23 $\pm$ 2˚C and 50 $\pm$ 5%RH for 48 hours and a panel with an acrylic clear coating was grasped by the lower chuck of a tensile testing machine (autograph, manufactured by Shimadzu Corporation) and one end of a protective film cut into pieces each measuring 25 mm in width and 100 mm in length and bonded was grasped by the upper chuck, and then a normal adhesive force was measured at a peeling speed of 0.3 m/minute and a peeling angle of 180˚ direction. A panel with an acrylic clear coating was attached to the body and one end of a protective film cut into pieces each measuring 25 mm in width and 100 mm in length and bonded was grasped by a chuck, and then a normal high rate peeling adhesive force was measured at a peeling speed of 30 m/minute and a peeling angle of 180˚ direction, using a high rate peeling test machine (manufactured by TESTER SANGYO CO., LTD.).

(Heat Resistant Adhesive force)

The aforementioned test piece was left in a hot air circulating dryer adjusted at 80 $\pm$ 2˚C for 500 hours and then a heat resistance adhesive force was measured at a peeling speed of 0.3 m/minute and 30 m/minute and a peeling angle of 180˚ direction.

(Moisture Resistant Adhesive force)

The aforementioned test piece was left in a thermohygrostat adjusted at a temperature of 50 ± 2˚C and 95 ± 3%RH for 500 hours, and then a moisture resistant adhesive force was measured at a peeling speed of 0.3 m/minute and 30 m/minute and a peeling angle of 180˚ direction.

(Evaluation of Weatherability)

The aforementioned test piece was left in a xenon weather meter adjusted at a black panel temperature of 63 ± 3˚C for 120 minutes (under raining conditions for 18 minutes) for 300 hours, and then the presence or absence of adhesive residue was visually confirmed.

(Adhesive force to back surface)

Samples (each two) were prepared by cutting the respective protective films obtained in Examples and Comparative Examples into pieces each measuring 20 mm in width and 100 mm in length. Next, a first protective film was bonded to a stainless steel plate (support plate) and a second protective film was bonded onto the back surface of the first protective film by a single reciprocating motion with a 2 kg roller to obtain test pieces. Each of the test pieces was stored under the environment of 50˚C and 24 hours and then a resistance power (adhesive force to back surface) was measured when the second protective film was developed under each peeling speed of 0.3 m/minute, 10 m/minute, and 30 m/minute and a peeling angle of 180˚ using a tensile testing machine. With respect to the same test piece stored at room temperature (23˚C) and 50%RH for 24 hours, and 40˚C and 92%RH for 24 hours, an adhesive force to the back surface was also measured. After the pressure-sensitive adhesive layer of the protective film was bonded onto the back surface of the base layer of the protective film and then stored at 50˚C for 24 hours, the adhesive force to the back surface is preferably from 0.1 to 2 N/20 mm, and more preferably from 0.2 to 1.6 N/20 mm at any peeling speed of 0.3 m/minute, 10 m/minute and 30 m/minute.

(Trouser Tear Strength)

As shown in Fig. 1, a protective film was cut into pieces each measuring 150 mm in length and 75 mm in width and was provided with a cut of 75 mm from the center of a transversal side in the right-angled direction (in the machine direction) to obtain test pieces. The left portion provided with a cut was grasped by the lower chuck of a tensile testing machine (autograph, manufactured by Shimadzu Corporation) and the left portion provided with a cut was grasped by the upper chuck, and then each test piece was torn at a peeling speed of 0.3 m/minute and a maximum load (maximum stress) was read to obtain a trouser tear strength (N). The protective film used in case of evaluation was left to stand at 23 ± 2˚C and 50 ± 5%RH for 48 hours to obtain test pieces, which were then evaluated.

[Table 1]

| Evaluation results | Example 1 | Example 2 | Example 3 | Comparative Example 1 |
|---|---|---|---|---|
| (Meth)acryl-based pressure-sensitive adhesive solution | A | B | C | D |
| Gel fraction of pressure-sensitive adhesive layer (%) | 79.8 | 83.4 | 85.5 | 30.0 |
| Weight average molecular weight of sol component (Mw) | $1.4 \times 10^5$ | - | $8.9 \times 10^4$ | $4.2 \times 10^5$ |
| Degree of swelling (times) | 20.9 | 17.6 | 15.6 | 85.2 |

[Table 2]

| <Adhesive charactesistics at peeling speed of 0.3 m/minute> (Unit: N/25 m) | | Examples | | | Comparative Example |
|---|---|---|---|---|---|
| Characteristics | Evaluation conditions | 1 | 2 | 3 | 1 |
| Normal adhesive force | 23˚C and 50%RH for 48 hours | 6.3 | 5.9 | 5.5 | 13.2 |
| Heat resistant adhesive force | 80˚C for 500 hours | 10.1 | 8.9 | 8.4 | 19.8 |
| Moisture resistant adhesive force | 50˚C and 95%RH for 500 hours | 5.9 | 5.4 | 5.1 | 13.7 |
| Weatherability (Adhesive residue) | Corresponding to being left in xenon weather meter for 300 hours | ○ | ○ | ○ | × |

[Table 3]

| <Adhesive characteristics at peeling speed of 30 m/minute> (Unit: N/25 m) | | Examples | | | Comparative Example |
|---|---|---|---|---|---|
| Characteristics | Evaluation conditions | 1 | 2 | 3 | 1 |
| Normal adhesive force | 23˚C and 50%RH for 48 hours | 12.3 | 10.7 | 10.4 | 31.5 |
| Heat resistant adhesive force | 80˚C for 500 hours | 26.5 | 23.4 | 22.0 | 42.3 |
| Moisture resistant adhesive force | 50˚C and 95%RH for 500 hours | 16.5 | 15.2 | 13.7 | 30.7 |
| Weatherability (Adhesive residue) | Corresponding to being left in xenon weather meter for 300 hours | ○ | ○ | ○ | × |

[Table 4]

| | | Example 2 | | | Comparative Example 1 | | |
|---|---|---|---|---|---|---|---|
| Evaluation results (Unit: N/20 m) | | Peeling speed (m/minute) | | | Peeling speed (m/minute) | | |
| | | 0.3 | 10 | 30 | 0.3 | 10 | 30 |
| Adhesive force to back surface | Room temperature (23˚C) | 1.1 | 0.9 | 0.5 | 0.9 | 2.8 | 1.3 |
| | 40˚C and 92%RH and | 0.9 | 0.9 | 0.5 | 0.9 | 3.5 | 1.5 |
| | 50˚C | 1.3 | 0.8 | 0.4 | 1.0 | 2.9 | 1.2 |

[Table 5]

| Evaluation results (Unit: N/20 m) | | Example 1 | | | Example 3 | | |
|---|---|---|---|---|---|---|---|
| | | Peeling speed (m/minute) | | | Peeling speed (m/minute) | | |
| | | 0.3 | 10 | 30 | 0.3 | 10 | 30 |
| Adhesive force to back surface | Room temperature (23˚C) | 0.9 | 0.7 | 0.5 | 0.8 | 0.6 | 0.4 |
| | 40˚C and 92%RH | 0.8 | 0.8 | 0.4 | 0.7 | 0.5 | 0.3 |
| | 50˚C | 1.0 | 0.7 | 0.4 | 0.9 | 0.5 | 0.3 |

[Table 6]

| Tear strength (Maximum stress) (Unit: N) | Examples | | | Comparative Example |
|---|---|---|---|---|
| | 1 | 2 | 3 | 1 |
| Normal (23˚C and 50%RH) peeling speed 0.3 m/minute | 11.5 | 9.9 | 9.3 | 1.3 |

From Table 1, it was possible to confirm excellent effects that with respect to the protective films obtained in Examples, since both the trouser tear strength and the adhesive force are within a specific range, desired pressure-sensitive adhesive characteristics can be obtained not only under normal conditions but also after exposed to severe conditions such as high temperature and high humidity, on the other hand, the protective film can be easily peeled off even when the protective film is peeled off at a high rate.

In contrast, in Comparative Example 1, it was confirmed that an adhesive residue arises, regardless of a low peeling speed and a high peeling speed, and there arises a problem that the base layer is torn when the protective film is peeled off at a high rate, and thus workability upon peeling off is inferior.

**Claims**

1. A protective film for an automotive wheel, comprising a base layer and a pressure-sensitive adhesive layer, wherein a trouser tear strength in the machine direction (MD) of the protective film is 3 N or more, and an adhesive force (adherend: a panel with an acrylic clear coating, after standing for 48 hours under the conditions of 23˚C and 50%RH) of the protective film is 4.9 N/25 mm or more at a peeling speed of 0.3 m/minute, and is 19.6 N/25 mm or less at a peeling speed of 30 m/minute.

2. The protective film for an automotive wheel according to claim 1, wherein the pressure-sensitive adhesive layer is obtained from a pressure-sensitive adhesive composition containing a (meth)acryl-based polymer and a crosslinking agent.

3. The protective film for an automotive wheel according to claim 2, wherein the (meth)acryl-based polymer contains a (meth)acryl-based monomer having an alkyl group of 1 to 14 carbon atoms in an amount of 40 to 90% by weight.

4. The protective film for an automotive wheel according to claim 2 or 3, wherein the (meth)acryl-based polymer has a glass transition temperature (Tg) of 0˚C or lower.

5. The protective film for an automotive wheel according to any one of claims 1 to 4, wherein the pressure-sensitive adhesive layer has a thickness of 3 to 50 $\mu$m.

6. The protective film for an automotive wheel according to any one of claims 1 to 5, wherein the base layer contains a polyethylene-based resin.

7. The protective film for an automotive wheel according to any one of claims 1 to 6, wherein the base layer has a thickness of 10 to 200 $\mu$m.

8.  The protective film for an automotive wheel according to any one of claims 1 to 7, wherein a separator is bonded onto a surface opposite the surface of the pressure-sensitive adhesive layer in contact with the base layer.

9.  The protective film for an automotive wheel according to claim 8, wherein the separator has a thickness of 5 to 200 $\mu$m.

10. The protective film for an automotive wheel according to any one of claims 3 to 9, which contains a (meth)acryl-based monomer having an alkyl group of 1 to 4 carbon atoms in an amount of 40 to 80% by weight in the total amount of the (meth)acryl-based monomer having an alkyl group of 1 to 14 carbon atoms.

11. The protective film for an automotive wheel according to any one of claims 1 to 10, wherein the pressure-sensitive adhesive layer contains a gel fraction in an amount of 60 to 95% by weight.

[Fig.1]

75mm

75
mm

150
mm

37.5
mm

## INTERNATIONAL SEARCH REPORT

| | International application No. |
|---|---|
| | PCT/JP2010/057169 |

**A. CLASSIFICATION OF SUBJECT MATTER**

*C09J7/02*(2006.01)i, *B60B7/02*(2006.01)i, *C09J133/06*(2006.01)i

According to International Patent Classification (IPC) or to both national classification and IPC

**B. FIELDS SEARCHED**

Minimum documentation searched (classification system followed by classification symbols)

C09J7/02, B60B1/00-19/14, C09J1/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2008/111663 A1 (Lintec Corp.), 18 September 2008 (18.09.2008), page 6, lines 10 to 22; page 8, lines 16 to 19; page 10, lines 5 to 29; page 11, line 8 to page 14, line 12; table 1 & US 2010/0062204 A1 | 1-11 |
| Y | JP 8-253750 A (Nitto Denko Corp.), 01 October 1996 (01.10.1996), claims; paragraphs [0004], [0037] (Family: none) | 1-11 |
| Y | JP 2006-35914 A (Bando Chemical Industries, Ltd.), 09 February 2006 (09.02.2006), claims; paragraphs [0075], [0076] (Family: none) | 1-11 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 22 July, 2010 (22.07.10) | 03 August, 2010 (03.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/057169

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-152659 A  (Oji Paper Co., Ltd.),<br>09 June 1998 (09.06.1998),<br>claims; paragraph [0032]<br>(Family: none) | 1-11 |

Form PCT/ISA/210 (continuation of second sheet) (July 2009)

**INTERNATIONAL SEARCH REPORT**

International application No.

PCT/JP2010/057169

Claim 1 of this application pertains to a protective film for automotive wheels which includes the specified matter "the protective film has a trouser tear strength in the machine direction (MD) of 3 N or higher". Claim 1 involves all protective films satisfying the specific trouser tear strength.

However, the modes disclosed in the meaning of PCT Article 5 are limited to an extremely small part of the claimed protective films for automotive wheels and are considered to lack a support by the description in the meaning of PCT Article 6.

Even when the common technical knowledge at the time of filing is taken into account, the property "the protective film has a trouser tear strength in the machine direction (MD) of 3 N or higher" cannot be used to specify the scope of protective films having that property. Claim 1 hence does not comply with the requirement of clearness as provided for in PCT Article 6.

Consequently, a search was made for the protective films which are specifically described in the description as ones wherein the protective film has a trouser tear strength in the machine direction (MD) of 3 N or higher and which are specified in claims 6 and 7 respectively as ones wherein "the base layer comprises a polyethylene resin" and ones wherein "the base layer has a thickness of 10-200 μm".

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005155758 A
- JP 2006035914 A
- WO 2005090453 A
- WO 2005090098 A
- WO 2007114450 A
- WO 2008111663 A
- JP 3879985 B
- JP 2008137547 A

**Non-patent literature cited in the description**

- Polymer Handbook. John Wiley & Sons, 1999, 198-253